# EUROPÄISCHE PATENTSCHRIFT

(11) **EP 3 490 779 B1**
(45) Veröffentlichungstag und Bekanntmachung des Hinweises auf die Patenterteilung: **06.10.2021**
(21) Anmeldenummer: 17751236.5
(22) Anmeldetag: 25.07.2017
(51) Int. Cl.: B29C 48/691, B29C 48/25, B29C 45/24, B29B 7/58

(54) **FILTRIERVORRICHTUNG FÜR EINE KUNSTSTOFFSCHMELZE ODER EIN HOCHVISKOSES FLUID**
FILTER DEVICE FOR A PLASTIC MELT OR A HIGHLY VISCOUS FLUID
DISPOSITIF DE FILTRATION POUR UNE MATIÈRE PLASTIQUE FONDUE OU UN FLUIDE À VISCOSITÉ ÉLEVÉE

(30) Priorität: 28.07.2016 DE 102016113979
(43) Veröffentlichungstag der Anmeldung: 05.06.2019
(73) Patentinhaber: Gneuss GmbH, 32549 Bad Oeynhausen (DE)
(72) Erfinder: GNEUß, Daniel, Charlotte, NC 28277 (US); GNEUß, Detlef, 6919 Carabietta (CH); GNEUß, Stephan, 32547 Bad Oeynhausen (DE)
(74) Vertreter: Tarvenkorn, Oliver
(86) Internationale Anmeldenummer: PCT/DE2017/100621
(87) Internationale Veröffentlichungsnummer: WO 2018/019336

(56) Entgegenhaltungen:
- CN-A- 1 772 461
- CN-U- 202 336 995
- CN-Y- 201 432 402
- DE-A1-102013 216 973
- DE-U1- 29 908 735

## Beschreibung

Die Erfindung betrifft eine Filtriervorrichtung für eine Kunststoffschmelze oder ein anderes hochviskoses Fluid mit den Merkmalen des Oberbegriffs des Anspruchs 1.

Bei der Filterung von Kunststoffschmelzen müssen Agglomerate oder Feststoffpartikel ausgefiltert werden, bevor die Schmelze einer weiterverarbeitenden Anlage wie einer Extrusionseinrichtung mit Düse zugeführt werden kann. Um eine unterbrechungsfreie Produktion zu ermöglichen sind verschiedene Bauarten von Filtriervorrichtungen bekannt, die den Austausch eines Filtersiebs ist im laufenden Betrieb erlauben, indem ein neues, nicht verunreinigtes Sieb in den Fließkanal gebracht und das verunreinigte daraus entfernt wird. Eine besondere Schwierigkeit bei der Filtration von Kunststoffschmelzen besteht darin, dass dies bei hohen Temperaturen und bei hohen Drücken erfolgen muss.

Eine gattungsgemäße Filtriervorrichtung ist grundlegend aus der DE 3302343 A1 bekannt.

Auch die DE 3341508 A1 zeigt eine weitere gattungsgemäße Filtriervorrichtung, bei der zudem eine Antriebsvorrichtung offenbart ist. Diese besteht aus einem Antriebselement in Form eines Hydraulikzylinders, der an einer Seitenkante des Gehäuses befestigt ist, einem Übertragungshebel sowie einer Freilaufeinheit, bestehend aus einem Ritzel, das in eine Außenverzahnung des Siebrads eingreift, und einem Freilauf, der eine Rückholbewegung des Übertragungshebels erlaubt, ohne dabei die Siebscheibe zu bewegen.

Die DE 3522050 A1 zeigt einen Antrieb über eine Klinkenverzahnung am Außenumfang des Siebrads und einem Vorschubstößel, das in die Verzahnung eingreift, um das Siebrad schrittweise zu bewegen.

Aus der CN 101602249A ist eine weitere gattungsgemäße Filtriervorrichtung bekannt, bei der der Antrieb des Siebrads ebenfalls über eine Klinkenvorrichtung erfolgt, wobei in diesem Fall ein Zughaken vorgesehen ist, der mittels des Übertragungshebels in die Verzahnung eingreift und das Siebrad schrittweise in Drehrichtung zieht.

CN1772461 A zeigt eine Filtriervorrichtung mit einer kleinen Vorspannfläche, die so gerade den Fließkanal umschließt. Die Kavitäten auf dem Siebrad mit den Sieben können sich daher nicht über einen größeren Winkel erstrecken und sind kreisrund ausgebildet. Damit steht nur eine kleine Filterfläche zur Verfügung.

Bei der in CN 202 336995 U beschriebenen Filtriervorrichtung liegt der Angriffspunkt des Antriebs innerhalb einer Vorspannfläche. Durch den Antrieb wird also der Vorspannbereich bei jedem Antriebsschritt aufgeweitet.

Bei einer Filtriervorrichtung nach DE 299 08 735 U1 sind nur drei Spannbolzen Die vorgespannte Fläche ist ein Dreieck, das noch nicht einmal den Fließkanal vollkommen abdeckt. Antriebseingriffspunkt und Flächenschwerpunkt liegen eng beieinander, so dass es ebenfalls nachteilige Effekte auf die Dichtigkeit geben kann, wenn das Siebrad schrittweise vorwärtsbewegt wird.

Auch bei der Filtriervorrichtung nach CN201432402 Y liegen Krafteingriffspunkt und Flächenschwerpunkt eng beieinander. Die durch den Antrieb eingeleiteten Kräfte wirken also direkt im druckbeaufschlagbaren Bereich.

Die besonderen Vorteile einer gattungsgemäßen Filtriervorrichtung wie in DE102013216973 A1 offenbart liegen darin, dass auf dem Siebrad eine Vielzahl von Einzelsieben platziert werden kann, welche sukzessive durchströmt werden und an der jeweiligen vom Fließkanal abgewandten Seite zu Reinigungszwecken leicht zugänglich sind oder ausgetauscht werden können. Auch der Aufbau der Filtriervorrichtung ist aufgrund des schichtweisen Aufbaus des Gehäuses einfach und kostengünstig.

Die Hauptschwierigkeit liegt jedoch in der Abdichtung zwischen den äußeren Gehäuseplatten und dem dazwischen eingeschlossenen Siebrad. Die Gehäuseteile müssen unter Einschluss des Siebrades derart gegeneinander verspannt werden, dass der Fließdruck keine zu starke Aufweitung des Gehäuses bewirkt und dadurch keine entsprechende Leckagestellen ausgebildet werden. Andererseits muss eine Beweglichkeit des Siebrades gegeben sein, da es bei zu starker Einklemmung nicht mehr drehbar ist. Es muss also stets eine bestimmte Mindest-Spaltweite zwischen den stirnseitigen Dichtungsflächen am Siebrad und den gegenüberliegenden Anlageflächen an den Einlauf- und Auslaufplatten gegeben sein. Die erforderliche Spaltweite hängt aber auch von dem jeweils zu verarbeitenden Fluid und dessen Viskosität ab, von der Verarbeitungstemperatur und dem Fließdruck im Bereich der Siebstelle. Während ein Bestreben also die Dichtigkeit ist, ist andererseits eine ausreichende Spaltweite erforderlich, damit ein sehr geringfügiger Austritt des Fluids über die Dichtungsstege hinweg möglich ist und durch das Fluid selbst eine Art Schmierfilm an beiden Stirnseiten des Siebrads ausgebildet wird.

Eine entsprechende Anpassung der Höhe des Siebrads und der Höhe der ebenfalls zwischen den Ein- und Auslaufplatten positionierten Distanzelemente, welche das Siebrad einschließen, ermöglichen die Einstellung einer bestimmten Spaltweite, die jedoch im Bereich von wenigen Mikrometern liegt, sodass die Fertigung der Distanzelemente und des zugehörigen Siebrads, welche zusammen die zwischen Ein- und Auslaufplatte eingefügte, sogenannte Innenpaarung bilden, sehr schwierig ist.

Es hat sich in der Praxis gezeigt, dass selbst bei einer sehr sorgfältigen Berechnung und Fertigung der Spaltweiten Probleme hinsichtlich der Beweglichkeit des Siebrads ergeben, die nur durch Reduzierung der Vorspannung behoben werden kann, welche wiederum zum Problem der Dichtigkeit führt.

Die Aufgabe der vorliegenden Erfindung liegt somit daran, die zwecks Dichtigkeit ausreichende Vorspannung im Gehäuse und die zur Schmierung und Beweglichkeit des Siebrads erforderliche Spaltweite zu optimieren und dadurch einen reibungslosen Betrieb zu gewährleisten.

Erfindungsgemäß wird diese Aufgabe durch eine Filtriervorrichtung mit den Merkmalen des Anspruchs 1 gelöst.

Die durch die Gehäusespannelemente aufgespannte Vorspannfläche ist weiterhin so positioniert, dass die druckbeaufschlagbare Fläche am Gehäuse davon vollständig umfasst ist, dass aber zugleich alle nicht-druckbeaufschlagten Flächenanteile weitgehend vorspannungsfrei gehalten werden, insbesondere im Bereich des Eingriffs des Antriebs. Somit wird in den nicht vorgespannten Bereichen die Kompression der aneinandergepressten Einzelteile des Gehäuses reduziert und die Spaltweite gegenüber dem darin eingeschlossenen Siebrad vergrößert. Der vorgespannte Bereich betrifft alle Flächenanteile, die unter dem Einfluss von Vorspannelementen liegen. Diese Fläche ist zunächst durch eine Polygonlinie definiert, welche die Mittelpunkte der Vorspannelemente verbindet. Angesichts des Durchmessers und der massiven Ausführung solcher Vorspannelemente wird diese Linie aber zumindest um den Betrag des Radius der Vorspannelemente noch nach außen versetzt. Weiterhin muss berücksichtigt werden, dass sich der druckbeaufschlagte Bereich mit dem Eintauchen einer Siebstelle bei Drehung des Siebrads im oberen Bereich schlagartig erweitert, während gleichzeitig unten eine Siebstelle aus dem Druckeinflussbereich herausgedreht wird, so dass sich die Flächenverhältnisse dauernd in pulsierender Weise verändern und nur bei Stillstand des Siebrads statisch sind. "Vollständig" bedeutet im Sinne der vorliegenden Erfindung daher, dass es keine nennenswerten druckbeaufschlagbaren Flächenanteile gibt, die so weit außerhalb der genannten Polygonlinie liegen, dass es zu einer zu großen Aufweitung des Gehäuses infolge des Innendrucks kommen kann. Berücksichtigt man also, dass sich der vorgespannte Bereich über den Polygonzug, der die Mittelpunkte der Vorspannelemente verbindet, hinaus erstreckt und dass sich die druckbeaufschlagte Fläche im Betrieb andauernd ändert, können rein geometrische Abweichungen zwischen vorgespannter und druckbeaufschlagbarer bzw. im Betrieb dann druckbeaufschlagter Fläche von bis zu 15%, insbesondere aber von maximal 10% auftreten, um dennoch das Kriterium "vollständig" im Sinne der vorliegenden Erfindung zu erfüllen.

Erfindungswesentlich ist weiter, dass der Angriffspunkt des Vorschubelements außerhalb des vorgespannten Bereichs liegt und dass die über das Vorschubelement auf den Außenumfang des Siebrads ausgeübte Kraft von dem Vorspannbereich weg gerichtet ist.

Konkret bedeutet dies, dass zwischen einer ersten Linie zwischen dem Flächenschwerpunkt der Vorspannfläche und dem Mittelpunkt des Siebrads in Bezug auf eine zweite Linie zwischen dem Mittelpunkt des Siebrads und dem Eingriffspunkt des Antriebs am Siebrad ein Winkel von mehr als 90° und weniger als 160° eingeschlossen ist. Dies hat den folgenden Effekt: Der Flächenschwerpunkt der Vorspannfläche kann als Angriffspunkt einer aus der flächigen Druckbelastung im durchströmten Bereich resultierenden Rückhaltekraft angesehen werden, welche aufgrund der Reibung zwischen den beiden Stirnseiten des Siebrads und den zugewandten Flächen in Ein- und Auslaufplatte des Gehäuses im druckbeaufschlagbaren und vorgespannten Bereich besteht. Die Rückhaltekraft wirkt tatsächlich differentiell pro druckbeaufschlagbarer Flächeneinheit mit einem individuellen Hebelarm in Bezug auf die Rotationsachse des Siebrads, kann aber idealisiert als eine resultierende Rückhaltekraft angenommen werden, die zwischen der Mittelachse des Siebrads und dem genannten Flächenschwerpunkt wirkt.

Als Flächenschwerpunkt ist im Zusammenhang mit der vorliegenden Erfindung kein exakter Punkt im mathematisch-geometrischen Sinn bezeichnet, sondern vielmehr ein kleiner Flächenbereich, der wandert, da sich die Flächen- und damit die Kraftverhältnisse aufgrund der kontinuierlichen und/oder schrittweisen Rotation des Siebrads ständig verändern. Sind alle Siebstellen, wie üblich, gleichartig aufgebaut, so kann sich der genannte Flächenschwerpunkt z. B. um die Hälfte des Teilungswinkels auf der Siebscheibe verändern.

Um das sich aus der resultierenden Rückhaltekraft im Flächenschwerpunkt ergebende Rückhalte-Drehmoment zu überwinden, ist ein größeres Drehmoment erforderlich, um Haftreibungskräfte zu überwinden und damit das Siebrad in Bewegung gesetzt werden kann. Dieses erforderliche Vorschubdrehmoment wird über die am Siebrad eingreifende Vorschubkraft hervorgerufen.

Der Lagerpunkt des Übertragungselements des Antriebs kann ebenfalls auf der genannten zweiten radialen Linie liegen.

Eine mögliche weitere Fortbildung der Erfindung besteht darin, dass Siebrad an seinem Umfang weitest möglich von den Distanzelementen umgeben zu lassen. Die notwendigen Vorspannungen im Gehäuse werden somit über die Distanzelemente, die zwischen der Einlaufplatte und der Auslaufplatte positioniert sind, sehr gleichmäßig aufgefangen, und ein Verzug des Gehäuses wird vermieden. In der durch die Gehäusespannelemente aufgespannten Vorspannfläche ist das Siebrad insbesondere sogar über mehr als 90 % seines Umfangs von den Distanzelementen umgeben. Lediglich in einem Eckenbereich, welcher auf der von der durchströmbaren Seite des Gehäuses abgewandten Seite liegt, ist der Außenumfang des Siebrads nicht überdeckt. Die Aussparung ist dort so groß, dass ein Vorschubelement des Antriebs angeordnet werden kann, aber vorzugsweise nicht viel größer als dazu notwendig. Eine weitere Aussparung in der Umfangsüberdeckung ist an der Unterkante des Gehäuses vorzusehen, um einen Abfluss von Fluid, das entweder als Schmierfilm benötigt wird oder als sonstige Leckströmung austritt, zu ermöglichen.

Bei der erfindungsgemäßen Filtriervorrichtung kann die Antriebseinrichtung in eine Verzahnung am Außenumfang des Siebrads eingreifen und ist wahlweise mit einem Ritzelantrieb oder mit einem Klinkenantrieb ausgestattet werden. Ein besonderer Vorteil der Erfindung liegt darin, dass aufgrund der bevorzugten Anordnung des Eingriffspunktes des Antriebs in einem Eckenbereich des Gehäuses - oben oder unten - genügend Bauraum zur Verfügung für beide Antriebsarten steht und daher ohne Änderungen des Gehäuses die eine oder andere Antriebsart realisiert werden kann. Die Anordnung in der Ecke lässt es auch zu, den vorgespannten Bereich, und damit den für die Filtration nutzbaren druckbeaufschlagbaren Bereich, zu vergrößern.

Bei einem Ritzelantrieb ist die Richtung der Vorschubkraft im Bereich des Eingriffs mit der Außenverzahnung des Siebrads als weitgehend tangential anzusehen. Verlängert man beide Vektoren - den der Rückhaltekraft und den der Vorschubkraft - nach hinten, also entgegen ihrer eigentlichen Orientierung, so ergibt sich ein sehr kleiner eingeschlossener Winkel β von weniger theoretisch weniger als 90°, vorzugsweise aber von weniger als 45°, und ein theoretischer Schnittpunkt, der weit außerhalb der Gehäusefläche der Filtriervorrichtung liegt. In jedem Fall läuft die Wirkungslinie der Vorschubkraft an dem vorgespannten Bereich vorbei und kreuzt diesen vorzugsweise überhaupt nicht oder zumindest nicht derart, dass durch den Vorschubvektor die durch die Erfindung beabsichtigten geometrischen Änderungen am Siebrad aufgehoben oder ins Gegenteil verkehrt werden. Entgegen der Anordnungen im eingangs dargestellten Stand der Technik wird nach der Erfindung auch keine Kraft ausgeübt, welche auf die druckbeaufschlagbare Seite der Filtriervorrichtung gerichtet ist, sondern nur eine von der vorgespannten Seite des Gehäuses weg nach außen weisende Kraft.

Dies gilt auch für die Wahl eines Klinkenantriebs, bei dem ein Vorschubelement in Form eines Stößels in die Verzahnung angreift. Hierbei kann zwar der Winkel zwischen dem Radius und dem Vektor der Vorschubkraft ungleich 90° sein, jedoch gilt auch für diesen Fall, dass die Vorschubkraft die Vorspannfläche bevorzugt nicht schneidet und vom Gehäuse und der Vorspannfläche darin weg nach außen gerichtet ist.

Aufgrund der am Flächenschwerpunkt angreifenden resultierenden Rückhaltekraft und der im Eingriffspunkt angreifenden Vorschubkraft, welche von dem Vorspannungsbereich weg gerichtet ist, wird eine Dehnung des dazwischen eingeschlossenen Sektors des Siebrads erreicht. Da mit einer Dehnung aufgrund der Volumenkonstanz auch stets eine Querkontraktion einhergeht, wird die Dicke der Siebscheibe in dem gedehnten Bereich sehr geringfügig reduziert, wobei die geringfügige Dickenreduktion aber bereits in den Größenordnungen liegt, die zur Herbeiführung einer für die Bewegung und Schmierung ausreichenden Spaltweite ausreichend ist.

Zwar wird in dem jeweils anderen Sektor des Siebrades, welcher in Drehrichtung gesehen zwischen der Eingriffsstelle des Antriebs und dem druckbeaufschlagbaren und vorgespannten Bereich liegt, eine Stauchung bewirkt. Da der Antrieb aber außerhalb des vorgespannten Bereichs und vorzugsweise in einem Eckenbereich angeordnet ist, findet bereits ein Großteil der Stauchung, die eben mit einer entsprechenden Dickenerhöhung des Siebrads verbunden ist, außerhalb des vorgespannten Bereichs statt. Aufgrund des bei Siebrädern üblichen, relativ großen Innenradius' wird die von der Eingriffsstelle des Antriebs diametral gegenüberliegende Seite weitgehend durch die Nabe von Schubspannungen abgeschirmt; dieser abgeschirmte Bereich betrifft bereits einen großen Teil der Vorspannfläche, nämlich denjenigen unterhalb des Flächenschwerpunkts. Schließlich wird dadurch, dass der eingeschlossene Winkel zwischen den beiden Hebelarmen, wie oben beschrieben, zwischen mehr als 90°, insbesondere 110°, und 160° liegt, ein Ungleichgewicht zwischen Dehnung und Stauchung erreicht. Die stauchenden Schubspannungen wirken auf eine viel größere Länge, sodass die damit verbundenen Dickenänderungen vergleichsweise kleiner ausfallen als die Dehnungen.

Die geschilderten Effekte wären bei einer Anordnung des Antriebs auf der vom Flächenschwerpunkt der Vorspannfläche genau diametral gegenüberliegenden Seite nicht gegeben oder zumindest stark reduziert, da sich dann die Dehnungen in der oberen Hälfte und die Stauchungen in der unteren Hälfte die Waage halten würden. Daher ist erfindungsgemäß ein Winkel zwischen diesen Linien von deutlich ungleich 180° vorgesehen.

Dadurch, dass erfindungsgemäß also vorgesehen ist, durch den Antrieb eine gezielte Dehnung des Siebrads herbeizuführen, wird die größere Spaltweite genau in dem Moment erzeugt, wenn sie auch benötigt wird, nämlich wenn die getaktete Drehung des Siebrades ansteht und über den Antrieb eingeleitet wird. In der dann folgenden Bewegungspause, in der der Antriebsmechanismus eine Rückholbewegung durchführt, können die genannten Dehnungen relaxieren, wodurch wiederum die Dicke erhöht, die Spaltweite verringert und die Dichtigkeit verbessert wird. Durch die erfindungsgemäße Anordnung von Vorspannfläche und Eingriffspunkt des Antriebs erfolgt quasi eine Art "atmende Verformung" innerhalb des Gehäuses und des Siebrades mit einer im Mikrometerbereich veränderlichen Schmierspaltweite.

Die erfindungsgemäße Reduzierung der vorgespannten Fläche erlaubt es bei über den Umfang vorzugsweise nahezu vollständigen Unterfütterung durch die zwischengelegten Distanzelemente, die Plattenelemente auf der Einlauf- und Auslaufseite relativ dünn zu halten und damit die Material- und Fertigungskosten zu reduzieren.

Vorteilhaft ist zudem, wenn zumindest zwei Vorspannelemente so angeordnet sind, dass eine gedachte Verbindungslinie zwischen ihnen den oben beschriebenen Bereich des Flächenschwerpunkts schneidet. Dieser Flächenschwerpunkt kann nämlich nicht nur idealisiert als Angriffspunkt einer der Drehung des Siebrades entgegenwirkenden Rückhaltekraft angenommen werden, sondern auch als Ausgangspunkt einer in Richtung der Normalen der Platten wirkenden resultierenden Aufspreizkraft, welche durch den Fließinnendruck verursacht ist. Sind die Gehäusespannelemente so angeordnet, dass die Wirkungslinien der Verschraubung über das Zentrum der Aufspreizkraft führt, kann in grober Näherung ein schmaler Streifen der Ein- und Auslaufplatten idealisiert als Biegebalken angesehen und entsprechend dimensioniert werden. Eine höhere Biegebelastung der Platten als in diesem streifenförmigen Bereich tritt nicht auf. Günstig ist weiterhin, wenn beidseits der beschriebenen streifenförmigen Zone weitere Paare von Gehäusespannelementen vorgesehen sind, deren gedachte Verbindungslinien in etwa parallel zu der genannten Streifenzone oder in einem spitzen Winkel dazu angeordnet sind.

Die Erfindung wird nachfolgend mit Bezug auf das in den Zeichnungen dargestellt Ausführungsbeispiel näher beschrieben. Die Figuren zeigen im Einzelnen:
- Fig. 1: eine perspektivische Ansicht auf ein Gehäuse einer Filtriervorrichtung,
- Fig. 2a: eine Filtriervorrichtung in Draufsicht;
- Fig. 2b: Teile der Filtriervorrichtung in perspektivischer Ansicht; und
- Fig. 3a, 3b: jeweils eine schematische Darstellung der an der Filtriervorrichtung im Betrieb wirkenden Kräfte.

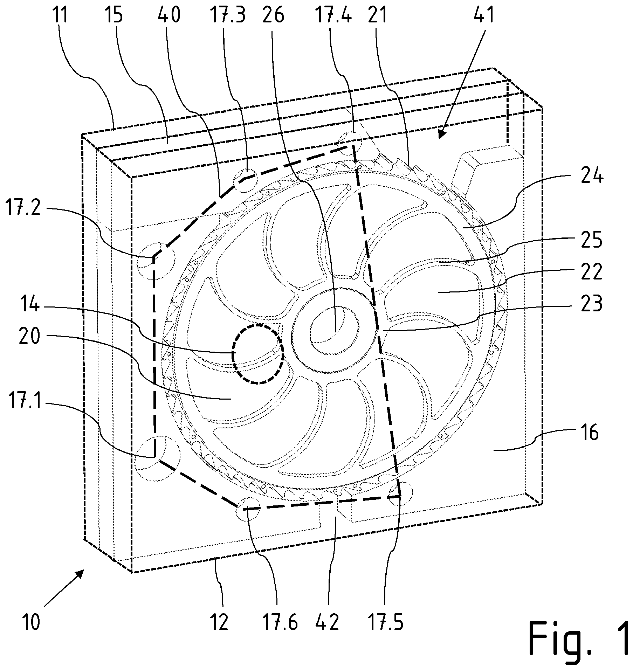

Figur 1 zeigt eine perspektivische Ansicht auf ein Gehäuse 10 einer Filtriervorrichtung, und zwar auf die Seite einer Auslaufplatte 12. In Figur 1 ist lediglich die Ebene der sogenannten Innenpaarung in Volllinien dargestellt, welche Distanzelemente 15,16 und ein Siebrad 20 umfasst. Die Zwischenebene ist zwischen einer Einlaufplatte 11 und einer Auslaufplatte 12 eingeschlossen, welche beide als imaginäre bzw. verdeckte Linien dargestellt sind.

Alle drei aneinander liegenden Elemente, also die Einlaufplatte 11, die Distanzelemente 15,16 und die Auslaufplatte 12 sind über insgesamt sechs Gehäusespannelemente 17.1 ...17.6 miteinander verschraubt und mit einer für den Betriebsdruck ausgelegten Vorspannung gegeneinander verspannt. Die Zwischenebene weist nur zwei Unterbrechungen am Außenumfang des Siebrad 20 auf, und zwar in der rechten oberen Ecke, wo ein Freiraum 41 zur Anordnung eines Antriebs- bzw. Vorschubelements freigehalten ist, sowie an der Unterseite, wo zwischen den Distanzelementen 15,16 ein schmaler Auslaufkanal 42 gebildet ist, um das sich am unteren Tiefpunkt ansammelnde Fluid aus dem Gehäuse 10 ausleiten zu können.

Das Siebrad 20 ist in an sich bekannter Weise mit einer Vielzahl von Siebstellen 22 ausgebildet, die jeweils durch einen inneren ringförmigen Dichtsteg 23, einen äußeren, ringförmigen Dichtsteg 24 sowie sich dazwischen erstreckende Stege 25, die von innen nach außen führen, abgegrenzt sind. In der Mitte ist eine Nabe 26 zur Aufnahme einer Achse oder Welle vorgesehen, um das Siebrad 20 in den Platten 11, 12 des Gehäuses 10 zu lagern. Die Nabe 26 kann als zusätzliches Vorspannelement genutzt werden.

Am Außenumfang des Siebrads 20 ist eine Klinkenverzahnung 21 mit Flanken ausgebildet, die in eine Richtung flach abfallen und in der anderen Richtung zurückspringen.

Die Gehäusespannelemente 17.1 bis 17.6 bewirken, dass es innerhalb einer Vorspannfläche 40, in der die Gehäuseelemente 11, 12, 15 und Teilen des Elements 16 stark aneinandergepresst sind, zu einer Kompression der Gehäuseelemente kommt und sich dadurch der Abstand zwischen den Ein- und Auslaufplatten 11, 12 und dem dazwischen eingeschlossenen Siebrad 20 reduziert. Jenseits der gedachten Linie zwischen den Gehäusespannelementen 17.4, 17.5, also seitlich und unterhalb des Freiraums 41 für den Antrieb, besteht hingegen keine starke Vorspannung, sodass an dieser Stelle, an der auch keine Dichtigkeit erforderlich ist, die Reibung zwischen den Gehäuseplatten 11,12 und dem Siebrad 20 reduziert ist.

Der mit 43 bezeichnete Kreis deutet die Lage der Einlauf - und Auslaufkanäle an und entspricht dem direkt durchströmten Bereich am Siebrad 20, der jedoch, wie an sich bekannt, unmittelbar vor und hinter der Siebstelle stark erweitert ist, um die zur Verfügung stehende Siebfläche besser ausnutzen zu können. Dennoch kann der Bereich des Ein- bzw. Auslaufkanals 43 als Lage des Flächenschwerpunkts des druckbeaufschlagbaren Bereichs angesehen werden. Dieser druckbeaufschlagbare Bereich liegt vollständig, oder fast vollständig, innerhalb der Vorspannfläche 40.

Eine gedachte Linie zwischen den Vorspannelementen 17.3, 17.6 führt direkt durch den Bereich 43. Die Verbindungslinie zwischen den Elementen 17.1, 17.2 läuft nahezu parallel dazu. Lediglich bei der Lage der letzten beiden Gehäusespannelemente 17.4, 17.5 gibt es eine Abweichung, da das untere Gehäusespannelement 17.5 weiter nach außen verlagert sein muss, um den Auslaufkanal 42 freizuhalten.

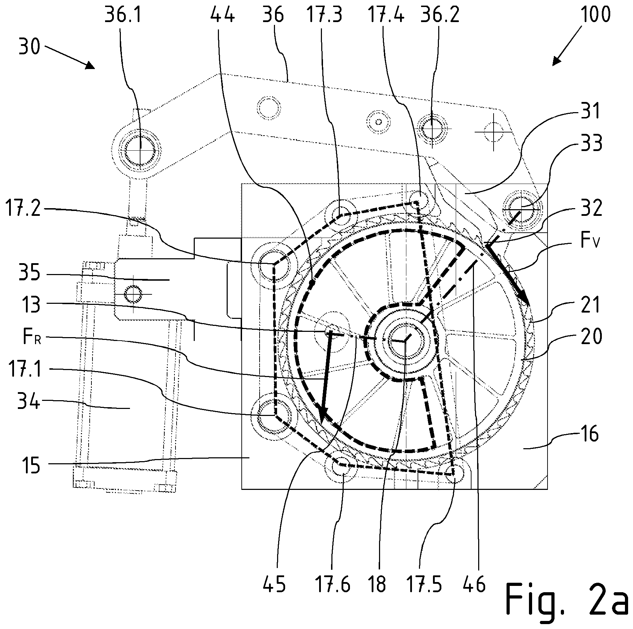

In Figur 2a ist eine montierte Filtriervorrichtung 100 in Draufsicht auf die Auslaufseite dargestellt. Ein Bereich 44 entspricht dem Durchfluss- und Druckbereich, der von dem Durchmesser des Einlauf- bzw. Auslaufkanals 43 ausgehend erweitert ist. Er ist symmetrisch aufgebaut, wobei sein Schwerpunkt im Bereich des Fließkanals 43 in liegt, der wiederum leicht oberhalb einer waagerechten Mittelachse im Gehäuse 10 angeordnet ist. Entsprechend verläuft die Richtung der Rückhaltekraft F_{R} nicht ganz vertikal, sondern ist senkrecht zu einer radialen Verbindungslinie zwischen dem Zentrum des Kanals 43 und der Mittelachse 18 ausgerichtet.

Eine weitere Linie 46 stellt die Verbindungslinie zwischen dem Zentrum 18 und einem Eingriffspunkt 32 eines Vorschubstößels 31 in die Außenverzahnung 21 des Siebrads 20 dar.

Eine Antriebseinrichtung 30 ist gebildet durch ein Antriebselement 34 in Form eines Hydraulikzylinders, der an einem Lagerelement 35 gelagert ist, welches bei dieser Ausführungsform direkt mit dem Distanzelement 15 in der Zwischenebene zwischen den Plattenelementen 11,12 angebracht ist. Das Antriebselement 34 ist mit seinem ausfahrbaren Kolben über ein erstes Gelenk 36.1 mit einem Übertragungselement in Form eines Übertragungshebels 36 verbunden, der an einem Lagerpunkt 33 im Gehäuse 10 gelagert ist, nämlich an einer Achse, welche den Freiraum 41 überbrückt, und zugleich in beiden Plattenelementen 11, 12 gelagert ist, so dass die Antriebskräfte nur exakt senkrecht zur Rotationsachse des Siebrads 20 wirken und ein asymmetrischer Verzug des Gehäuses durch Einsetzen des Antriebs vermieden wird

An dem Übertragungshebel 36 ist über ein weiteres Gelenk 36.2 ein Vorschubelement beweglich gelagert, das in Form eines Vorschubstößels 31 ausgebildet ist, welcher mit seiner Spitze am Eingriffspunkt 32 in die Verzahnung 21 eingreift und dort eine nach außen, vom Gehäuse 10 und vor allem vom Vorspannbereich 40 weg, gerichtete Vorschubkraft Fv ausübt.

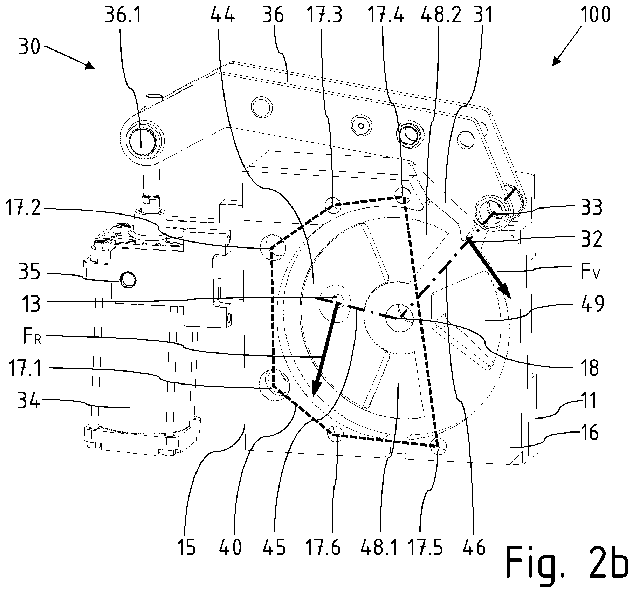

Fig. 2b zeigt die Filtriervorrichtung 100 in einer perspektivischen Ansicht auf die Auslaufseite, wobei zur Verdeutlichung bei dieser Darstellung sowohl das Siebrad wie auch die Auslaufplatte entfernt worden sind. Vom Gehäuse sichtbar sind die Einlaufplatte 11 und die Distanzelemente 15, 16 sowie die komplette Antriebsvorrichtung 30. Beim Blick in das Innere des Gehäuses ist zunächst der Einlaufkanal 43 in der Einlaufplatte sichtbar, der sich in ein Kreisringsegment, das etwa 120° umfasst erweitert. Das Fluid, das durch den Eintrittskanal 43 austritt, kann sich also in dem druckbeaufschlagbaren Bereich 44 ungehindert ausbreiten und damit mehrere Siebstellen des Siebrades durchströmen.

Dieser Hauptfilterbereich, bei dem etwa im Mittelpunkt der Eintrittskanal 43 liegt, ist durch zwei weitere Segmente 48.1, 48.2 ober- und unterhalb der Mittelachse 18 ergänzt, die in der Seitenansicht der Form eines Kaffeefilters gleichen. Diese Segmente 48.1, 48.2 werden druckbeaufschlagt, indem eine der Kavitäten des Siebrads 20 noch bis in den Bereich 44 hineinragt und von der Überschneidung mit dem Bereich 44 ausgehend druckbeaufschlagt wird.

Bei dem unteren Segment 48.1 handelt es sich um einen Vorflutbereich, d.h. die dort mit der Drehung des Siebrades im Uhrzeigersinn eintretenden Siebstellen werden dort mit dem Fluid vorgeflutet, sobald eine Siebstelle mit dem Bereich 44 in Überlappung kommt, insbesondere wenn das Sieb an der betreffenden Siebstelle zuvor an einer Siebwechselposition 49 ausgetauscht worden sind.

Der durch die gestrichelte Linie angedeutete vorgespannte Flächenbereich 44 umschließt das obere Segment 48.2 nicht ganz vollständig, so dass ein kleiner Bereich der druckbeaufschlagbaren Fläche 44 herausragt. Abgesehen davon, dass dort der Druck gegenüber dem Fließdruck im Bereich 44 reduziert ist, weil er nur indirekt durch eine gebremste Strömung innerhalb einer Kavität aufgebaut wird, wenn die Kavität partiell mit dem Bereich 44 überlappt, und dass sich die reale Vorspannfläche über den Polygonzug 44, welcher in den Figuren den vorgespannten Bereich darstellt, hinaus nach außen erstreckt, ist der kleine herausragende Bereich aber auch vorteilhaft, damit dort gegebenenfalls nach einem Siebwechsel eingeschlossene Luft entweichen kann.

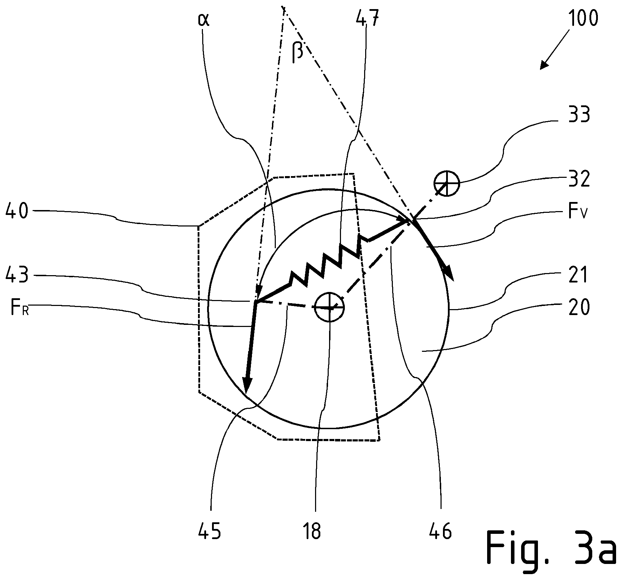

Figur 3a ist eine schematische Darstellung zur Illustration der Kräfteverhältnisse und Erläuterung des Prinzips der sogenannten "atmenden Verformung". Wenn der Antrieb zum Weiterdrehen des Siebrads 20 einsetzt - und erst genau dann - wirkt eine Vorschubkraft F_{V} über einen Hebelarm entsprechend der Linie 46 in Bezug auf das Zentrum 18. Aufgrund der Reibung wirkt der Vorschubkraft Fv eine Rückhaltekraft F_{R} entgegen, die in Abhängigkeit davon, wo sich die Stege 23, 24, 25 einer Siebstelle im Bereich des Fließkanals 43 gerade befinden, hinsichtlich Ort, Richtung und Größe leicht variiert. Die Hebel beider Kräfte F_{R}, Fv schließen einen Winkel α ein, der auf jeden Fall deutlich größer als 90° und deutlich kleiner als 180° sein muss, da sonst die beschriebenen Dehneffekte in dem relevanten Sektor des Siebrads 20 zwischen den Linien 45 und 46 nicht eintreten können. Vorzugsweise beträgt der Winkel α mehr als 110° und insbesondere bei 135°.

Verlängert man die Kraftvektoren F_{R}, F_{V} entgegen ihrer Orientierung nach hinten, so schneiden sich die Kraftlinien in einem Punkt außerhalb des Gehäuses 10 in einem spitzen Winkel β von mehr als 20° und weniger als 70°. Die Feder 47 stellt symbolisch den dehnbaren Sektor des Siebrads 20 dar. Wie oben bereits beschrieben, ist der Kraftvektor F_{R} als stets senkrecht zur wirksamen Hebellänge in Form der Linie 45 anzunehmen, da der Punkt 43 im Betrieb je nach den momentanen Strömungs- und Druckverhältnissen wandert und der Hebel 45 damit jeweils auf einem Radius liegt. Hingegen greift der Kraftvektor Fv an einem ortsfesten Eingriffspunkt 32 am Gehäuse an, so dass der Hebelarm in Form der Linie 46 fest definiert ist. Je nach Wirkungsrichtung des Antriebs verläuft Fv aber nicht genau senkrecht zur Linie 46, wie auch in Fig. 3a dargestellt. Dadurch gilt nicht zwangsläufig die Beziehung β = 180°-α.

Auch muss eben wegen des temporär veränderlichen Punkts 43 als angenommenem Angriffspunkt einer resultierenden Rückhaltekraft F_{R} berücksichtigt werden, dass das bevorzugte Winkelmaß für α = 110° ... 135° als ein Mittelwert anzusehen sind, und dass sich entsprechend der "atmenden Verformung" ein momentaner Winkel α(t) um wenige Grad wellenförmig verringert oder vergrößert.

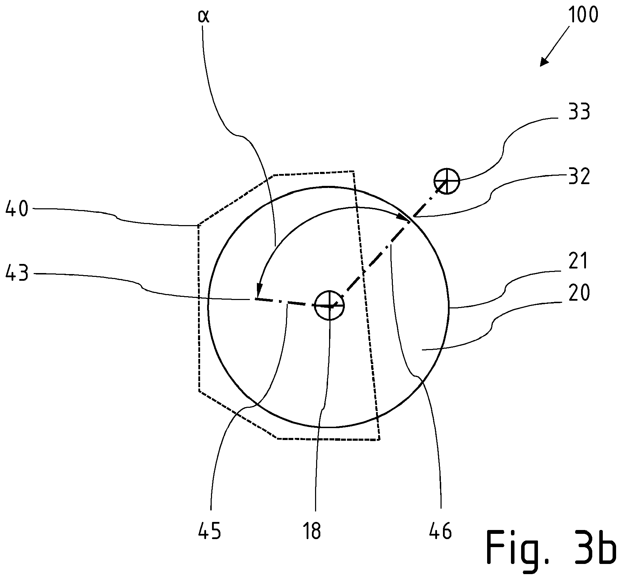

Setzt der Antrieb wieder aus, um die Rückzugsbewegung des Stößels 31 und des Übertagungshebels 36 durchzuführen oder einfach um zu pausieren, bis eine erneute Verschmutzung der Siebstelle registriert wird, gibt es keine Vorschubkraft Fv mehr und auch keine Rückhaltekraft F_{R} als Reaktionskraft. Diese Situation zeigt Figur 3b. Das Siebrad 20 kann in diesem Zeitintervall im zuvor gedehnten, oben liegenden Sektor relaxieren und nimmt dadurch seine ursprüngliche Gestalt an, so dass sich die Breite des Siebrads 20 vergrößert, die die Spaltweite temporär reduziert und dadurch die Abdichtwirkung erhöht.

## Patentansprüche

1. Filtriervorrichtung (100) für eine Kunststoffschmelze oder ein anderes hochviskoses Fluid, wenigstens umfassend:
- ein Gehäuse (10), das wenigstens aufweist:
- eine Einlaufplatte (11) mit wenigstens einem Einlaufkanal (13),
- eine Auslaufplatte (12) mit wenigstens einem Auslaufkanal;
- wenigstens ein zwischen der Einlaufplatte (11) und der Auslaufplatte (12) angeordnetes Distanzelements (15, 16);
- sowie wenigstens drei Gehäusespannelemente (17.1, ...,17.6), mit denen die Einlaufplatte (11) und die Auslaufplatte (12) unter Einschluss des Distanzelements (15, 16) gegeneinander verspannt sind;
- ein Siebrad (20):
- das in dem Gehäuse (10) zwischen der Einlaufplatte und der Auslaufplatte (11, 12) drehbar gelagert ist und
- das eine Vielzahl von Siebstellen (22) aufweist, die jeweils zwischen dem Einlaufkanal (13) und dem Auslaufkanal positionierbar und durchströmbar sind, wobei die durchströmbaren und mit Fluiddruck beaufschlagbaren Bereiche (44) des Siebrads (20) innerhalb einer von den Gehäusespannelementen (17.1, ...,17.6) aufgespannten Vorspannfläche (40) liegen,
- eine Antriebseinrichtung (30) mit einem Antriebselement (35), welches an einem Eingriffspunkt (32) eine Vorschubkraft Fv auf das Siebrad (20) ausübt,
- wobei am Siebrad (20) zwischen einer ersten Linie (45), die sich zwischen dem Flächenschwerpunkt (43) der Vorspannfläche (40), an dem eine resultierende Reibungskraft F_{R} angreift, und dem Mittelpunkt (18) des Siebrads (20) erstreckt, und einer zweiten Linie (46) zwischen dem Mittelpunkt (18) und dem Eingriffspunkt (32), an welchem eine Vorschubkraft Fv angreift, in Drehrichtung gesehen ein Winkel α von größer als 90° und kleiner als 160° eingeschlossen ist;
**dadurch gekennzeichnet,**
**dass** der Eingriffspunkt (32) der Antriebseinrichtung (30) am Siebrad (20) außerhalb der Vorspannfläche (40) angeordnet ist.

2. Filtriervorrichtung (100) nach Anspruch 1, **dadurch gekennzeichnet, dass** ein Lagerpunkt (33) und der Eingriffspunkt (32) jeweils in einem Eckenbereich (41) des Gehäuses (10) an der von dem Fließkanal (43) abgewandten Seite angeordnet sind.

3. Filtriervorrichtung (100) nach Anspruch 1 oder 2, **dadurch gekennzeichnet, dass** der Vektor der von der Antriebseinrichtung (30) auf das Siebrad (20) ausgeübten Vorschubkraft Fv außerhalb der Vorspannfläche (40) verläuft.

4. Filtriervorrichtung (100) nach einem der vorhergehenden Ansprüche, **dadurch gekennzeichnet, dass** das Siebrad (20) über mehr als 80% seines Umfangs von dem wenigstens einen Distanzelement (15, 16) umgeben ist.

5. Filtriervorrichtung (100) nach einem der vorhergehenden Ansprüche, **dadurch gekennzeichnet, dass** das Siebrad (20) im Bereich seines Außenumfangs mit wenigstens einer Verzahnung (21) versehen ist und dass das Antriebselement (35) an dem Eingriffspunkt (32) formschlüssig in die Verzahnung (21) eingreift.

6. Filtriervorrichtung (100) nach Anspruch 5, **dadurch gekennzeichnet, dass** die Verzahnung (21) am Siebrad (20) als eine symmetrische Verzahnung ausgebildet ist und das Vorschubelement ein drehbar gelagertes Ritzel ist.

7. Filtriervorrichtung (100) nach Anspruch 5, **dadurch gekennzeichnet, dass** die Antriebseinrichtung (30) als Klinkenantrieb ausgebildet ist, wobei das Vorschubelement einen Vorschubstößel (31) umfasst und dass die Verzahnung (21) am Siebrad (20) in Richtung des Vorschubstößels (31) geneigte Flanken aufweist.

8. Filtriervorrichtung (100) nach einem der vorhergehenden Ansprüche, **dadurch gekennzeichnet, dass** das Antriebselement (35) über wenigstens ein Übertragungselement (36) mit einem Vorschubelement (31) verbunden ist.

9. Filtriervorrichtung (100) nach Anspruch 8, **dadurch gekennzeichnet, dass** das Übertragungselement (36) an dem Lagerpunkt (33) in einer Achse gelagert ist, die sich durch beide Plattenelemente (11, 12) erstreckt.

10. Filtriervorrichtung (100) nach einem der vorhergehenden Ansprüche, **dadurch gekennzeichnet, dass** der innerhalb der Vorspannfläche (40) gelegene Teil des Siebrads (20) über mehr als 90% seines Umfangs von dem Distanzelement (15, 16) umgeben ist.

11. Filtriervorrichtung (100) nach einem der vorhergehenden Ansprüche, **dadurch gekennzeichnet, dass** zwischen den jeweiligen Vektoren einer in der Vorspannfläche (40) angreifenden, resultierenden Reibungskraft F_{R} und der im Eingriffspunkt (32) angreifenden Vorschubkraft Fv ein Winkel β von kleiner als 60° eingeschlossen ist und sich durch die Vektoren führende Geraden außerhalb des Gehäuses (10) schneiden.

12. Filtriervorrichtung (100) nach einem der vorhergehenden Ansprüche, **dadurch gekennzeichnet, dass** wenigstens zwei Distanzelemente (15, 16) vorgesehen sind, die an der Unterseite der Filtriervorrichtung (100) beabstandet zueinander sind und einen Auslasskanal (42) ausbilden.

13. Filtriervorrichtung (100) nach einem der vorhergehenden Ansprüche, **dadurch gekennzeichnet, dass** wenigstens zwei Distanzelemente (15, 16) vorgesehen sind, die in der oberen Hälfte der Filtriervorrichtung (100) im Bereich der Lager- und Eingriffspunkte (32, 33) voneinander getrennt sind.

## Claims

1. Filtering apparatus (100) for a plastic melt or some other highly viscous fluid, at least comprising:
- a housing (10) which has at least:
- an inflow plate (11) with at least one inflow channel (13),
- an outflow plate (12) with at least one outflow channel;
- at least one spacer element (15, 16) which is arranged between the inflow plate (11) and the outflow plate (12);
- and at least three housing tensioning elements (17.1, ..., 17.6), by way of which the inflow plate (11) and the outflow plate (12) are braced against one another while sandwiching the spacer element (15, 16);
- a screen wheel (20):
- which is mounted rotatably in the housing (10) between the inflow plate and the outflow plate (11, 12), and
- which has a multiplicity of screen points (22) which can each be flowed through and positioned between the inflow channel (13) and the outflow channel, wherein those regions (44) of the screen wheel (20) which can be flowed through and subjected to fluid pressure are situated within a pre-tensioning area (40) spanned by the housing tensioning elements (17.1, ..., 17.6),
- a drive device (30) with a drive element (35) which exerts an advancing force F_{V} on the screen wheel (20) at an engagement point (32),
- wherein, at the screen wheel (20), as seen in the direction of rotation, an angle α of greater than 90° and less than 160° is enclosed between a first line (45), which extends between the centroid (43) of the pre-tensioning area (40), at which centroid a resultant friction force F_{R} acts, and the central point (18) of the screen wheel (20), and a second line (46) between the central point (18) and the engagement point (32), at which an advancing force F_{V} acts;
**characterized**
**in that** the engagement point (32) of the drive device (30) on the screen wheel (20) is arranged outside the pre-tensioning area (40).

2. Filtering apparatus (100) according to Claim 1, **characterized in that** a bearing point (33) and the engagement point (32) are each arranged in a corner region (41) of the housing (10) at the side facing away from the flow channel (43).

3. Filtering apparatus (100) according to Claim 1 or 2, **characterized in that** the vector of the advancing force F_{V} exerted on the screen wheel (20) by the drive device (30) is outside the pre-tensioning area (40) .

4. Filtering apparatus (100) according to one of the preceding claims, **characterized in that** the screen wheel (20) is surrounded over more than 80% of its periphery by the at least one spacer element (15, 16) .

5. Filtering apparatus (100) according to one of the preceding claims, **characterized in that** the screen wheel (20) is provided in the region of its outer periphery with at least one toothing (21), and **in that** the drive element (35) engages into the toothing (21) in a form-fitting manner at the engagement point (32).

6. Filtering apparatus (100) according to Claim 5, **characterized in that** the toothing (21) on the screen wheel (20) is formed as a symmetrical toothing, and the advancing element is a rotatably mounted pinion.

7. Filtering apparatus (100) according to Claim 5, **characterized in that** the drive device (30) is designed as a pawl drive, wherein the advancing element comprises an advancing ram (31), and **in that** the toothing (21) on the screen wheel (20) has flanks which are inclined in the direction of the advancing ram (31).

8. Filtering apparatus (100) according to one of the preceding claims, **characterized in that** the drive element (35) is connected to an advancing element (31) via at least one transmission element (36).

9. Filtering apparatus (100) according to Claim 8, **characterized in that** the transmission element (36) is mounted at the bearing point (33) on an axle which extends through both plate elements (11, 12).

10. Filtering apparatus (100) according to one of the preceding claims, **characterized in that** that part of the screen wheel (20) which is situated within the pre-tensioning area (40) is surrounded over more than 90% of its periphery by the spacer element (15, 16) .

11. Filtering apparatus (100) according to one of the preceding claims, **characterized in that** an angle β of less than 60° is enclosed between the respective vectors of a resultant friction force F_{R} acting in the pre-tensioning area (40) and the advancing force F_{V} acting at the engagement point (32), and straight lines passing through the vectors intersect outside the housing (10).

12. Filtering apparatus (100) according to one of the preceding claims, **characterized in that** provision is made of at least two spacer elements (15, 16) which are spaced apart from one another, and form an outlet channel (42), at the bottom side of the filtering apparatus (100).

13. Filtering apparatus (100) according to one of the preceding claims, **characterized in that** provision is made of at least two spacer elements (15, 16) which are separated from one another in the upper half of the filtering apparatus (100) in the region of the bearing and engagement points (32, 33).

## Revendications

1. Dispositif de filtration (100) pour une masse fondue de matière plastique ou un autre fluide hautement visqueux, comprenant au moins :
- un boîtier (10), qui comprend au moins :
- une plaque d'entrée (11) munie d'au moins un canal d'entrée (13),
- une plaque de sortie (12) munie d'au moins un canal de sortie ;
- au moins un élément d'espacement (15, 16) agencé entre la plaque d'entrée (11) et la plaque de sortie (12) ;
- ainsi qu'au moins trois éléments de serrage de boîtier (17.1, ..., 17.6), avec lesquels la plaque d'entrée (11) et la plaque de sortie (12) sont serrées l'une contre l'autre en incorporant l'élément d'espacement (15, 16) ;
- une roue de tamisage (20) :
- qui est montée de manière rotative dans le boîtier (10) entre la plaque d'entrée et la plaque de sortie (11, 12) et
- qui comprend une pluralité d'emplacements de tamisage (22), qui peuvent chacun être positionnés entre le canal d'entrée (13) et le canal de sortie et peuvent être traversés, les zones (44) de la roue de tamisage (20) pouvant être traversées et pouvant être sollicitées avec une pression de fluide étant situées à l'intérieur d'une surface de précontrainte (40) définie par les éléments de serrage de boîtier (17.1, ..., 17.6),
- un appareil d'entraînement (30) muni d'un élément d'entraînement (35), qui exerce à un point de contact (32) une force d'avancement F_{V} sur la roue de tamisage (20),
- sur la roue de tamisage (20), un angle α supérieur à 90° et inférieur à 160° étant formé, vu dans la direction de rotation, entre une première ligne (45), qui s'étend entre le centroïde (43) de la surface de précontrainte (40), auquel agit une force de frottement résultante F_{R}, et le centre (18) de la roue de tamisage (20), et une deuxième ligne (46) entre le centre (18) et le point de contact (32) auquel agit une force d'avancement F_{V};
**caractérisé en ce que**
le point de contact (32) de l'appareil d'entraînement (30) est agencé sur la roue de tamisage (20) à l'extérieur de la surface de précontrainte (40).

2. Dispositif de filtration (100) selon la revendication 1, **caractérisé en ce qu'**un point de montage (33) et le point de contact (32) sont chacun agencés dans une zone de coin (41) du boîtier (10) sur le côté détourné du canal d'écoulement (43).

3. Dispositif de filtration (100) selon la revendication 1 ou 2, **caractérisé en ce que** le vecteur de la force d'avancement F_{V} exercée sur la roue de tamisage (20) par l'appareil d'entraînement (30) s'étend à l'extérieur de la surface de précontrainte (40) .

4. Dispositif de filtration (100) selon l'une quelconque des revendications précédentes, **caractérisé en ce que** la roue de tamisage (20) est entourée sur plus de 80 % de sa périphérie par l'au moins un élément d'espacement (15, 16).

5. Dispositif de filtration (100) selon l'une quelconque des revendications précédentes, **caractérisé en ce que** la roue de tamisage (20) est munie d'au moins une denture (21) dans la zone de sa périphérie extérieure et **en ce que** l'élément d'entraînement (35) s'engage dans la denture (21) par accouplement de forme au point de contact (32).

6. Dispositif de filtration (100) selon la revendication 5, **caractérisé en ce que** la denture (21) est configurée sous la forme d'une denture symétrique sur la roue de tamisage (20) et l'élément d'avancement est un pignon monté de manière rotative.

7. Dispositif de filtration (100) selon la revendication 5, **caractérisé en ce que** l'appareil d'entraînement (30) est configuré sous la forme d'un entraînement à cliquet, l'élément d'avancement comprenant un poussoir d'avancement (31), et **en ce que** la denture (21) sur la roue de tamisage (20) comprend des flancs inclinés en direction du poussoir d'avancement (31).

8. Dispositif de filtration (100) selon l'une quelconque des revendications précédentes, **caractérisé en ce que** l'élément d'entraînement (35) est relié à un élément d'avancement (31) par l'intermédiaire d'au moins un élément de transmission (36).

9. Dispositif de filtration (100) selon la revendication 8, **caractérisé en ce que** l'élément de transmission (36) est monté au point de montage (33) dans un axe, qui s'étend à travers les deux éléments plaques (11, 12).

10. Dispositif de filtration (100) selon l'une quelconque des revendications précédentes, **caractérisé en ce que** la partie de la roue de tamisage (20) située à l'intérieur de la surface de précontrainte (40) est entourée sur plus de 90 % de sa périphérie par l'élément d'espacement (15, 16).

11. Dispositif de filtration (100) selon l'une quelconque des revendications précédentes, **caractérisé en ce qu'**un angle β inférieur à 60° est formé entre les vecteurs respectifs d'une force de frottement résultante F_{R} agissant dans la surface de précontrainte (40) et la force d'avancement F_{V} agissant au point de contact (32), et des droites passant par les vecteurs se coupent à l'extérieur du boîtier (10).

12. Dispositif de filtration (100) selon l'une quelconque des revendications précédentes, **caractérisé en ce qu'**au moins deux éléments d'espacement (15, 16) sont prévus, qui sont espacés l'un de l'autre sur le côté inférieur du dispositif de filtration (100) et forment un canal d'échappement (42).

13. Dispositif de filtration (100) selon l'une quelconque des revendications précédentes, **caractérisé en ce qu'**au moins deux éléments d'espacement (15, 16) sont prévus, qui sont séparés l'un de l'autre dans la moitié supérieure du dispositif de filtration (100) dans la zone des points de montage et de contact (32, 33) .
